# EUROPEAN PATENT APPLICATION

(11) **EP 1 775 070 A1**
(43) Date of publication of application: **18.04.2007**
(21) Application number: 06255240.1
(22) Date of filing: 11.10.2006
(51) Int. Cl.: B24B 55/04, B23Q 11/08

(54) **Grinding machine**

(30) Priority: 15.10.2005 GB 0521021
(71) Applicant: Curtis Machine Tools Limited, Slough Lane Ardleigh Colchester, CO7 7RU (GB)
(72) Inventor: Curtis, Richard Martin, Clacton-on-Sea, CO16 9LZ (GB); Wallis, John Philip, Daventry, NN11 3ET (GB)
(74) Representative: Copp, David Christopher

(57) **Abstract**

A grinding machine for grinding short components has a grinding enclosure 18 in which the grinding operation takes place. The grinding enclosure contains the grinding wheel 20, a workpiece holder 21 and a wheel dressing station 58, but all other components of the machine are mounted outside the enclosure, so as to be kept out of contact with coolant and swarf. The enclosure is sealed, to an extent sufficient to prevent egress of coolant and grinding debris and has openable doors 36, 42 to allow loading and unloading of workpieces and mounting and removal of grinding wheels.

## Description

The invention relates to a machine for grinding components, particularly cylindrical or 'out of round' or prismatic components, in an enclosure in order to fully retain fluid and abrasive grit generated as part of the process, and to keep coolant and grinding debris away from vulnerable parts of the machine.

In a grinding machine, an abrasive grinding wheel is rotated in contact with a workpiece to be ground while a coolant liquid is directed to the interface between the wheel and the workpiece, both to cool the workpiece and the wheel, and to carry away debris. In a grinding process (in contract to a cutting or chip-removing machining process), the debris being removed is in the form of very fine particles, and consists in part of material removed from the workpiece and in part of abrasive particles worn away from the grinding wheel. The mixture of coolant and this debris is itself highly abrasive and can damage parts of the machine with which it comes into contact.

A conventional grinding machine includes a guard fitted around the grinding wheel to contain most of the pieces of grinding wheel in case of wheel burst and to help contain the grinding coolant and prevent it being thrown off by the speed of the grinding wheel. The whole machine is contained within an enclosure which prevents human access while the machine is operating and which contains the coolant. In a conventional machine, the machine parts, such as drive mechanisms and slides, are all contained within the enclosure and may come into contact with coolant or grinding debris. As a result the machine elements must be individually protected from the coolant, which adds considerably to the cost of the machine.

The inventor has designed a machine, particularly for grinding small components, which has a considerably smaller footprint than conventional machines and which protects the machine parts from coming into contact with coolant. As a result, the parts used do not have to be so rigorously protected to withstand contact with coolant and are, therefore, cheaper and have a longer working life.

According to a first aspect of the invention, there is provided a grinding machine having a grinding enclosure with a grinding wheel, a workpiece holder, means for removing grinding debris from the enclosure and mechanisms for driving the wheel, for moving the workpiece holder and for loading and unloading workpieces being provided outside of the enclosure.

In most (but not all) applications, coolant will be introduced to cool the workpiece and the grinding wheel during grinding operation, and the machine will then included a coolant supply and removal means in the enclosure and means for circulating the coolant outside of the enclosure.

In a second aspect of the invention, there is provided a grinding machine comprising a spindle for supporting a grinding wheel and having a drive supply, a work head having a drive supply, the work head being provided with a workpiece holder for supporting a workpiece; at least one of the spindle and the workpiece holder being arranged such that it can move closer to the other; the machine further comprising a substantially sealed enclosure that encloses the spindle and the workpiece holder, the enclosure being provided with a coolant supply means and a coolant removal means; wherein the coolant removal means is arranged such that, in use, coolant is removed from the enclosure without coming into contact with parts of the grinding machine that are outside the enclosure, other than the coolant removal means.

In use, a grinding wheel is mounted on the spindle. The enclosure may be any suitable enclosure for enclosing a grinding wheel. One skilled in the art would be aware that it is necessary to make the enclosure from material that can withstand wheel burst. As the enclosure does not move it is preferable that the enclosure is structural part of the machine.

The enclosure is substantially sealed. By substantially sealed, it is meant that the enclosure may allow the entry of air into the enclosure but does not allow significant coolant or grinding debris or fumes to escape from the enclosure except via the coolant removal means. This stops machine parts outside the enclosure from coming into contact with the coolant or grinding fumes.

Preferably the drive supply for the spindle is external to the enclosure. The drive supply for the work head is also preferably external to the enclosure. By positioning the drive supplies outside the enclosure, the drive supplies are prevented from coming into contact with coolant.

The grinding machine preferably further comprises a dressing tool mount for supporting a dressing tool for dressing the grinding wheel, in use. The dressing tool mount may be any suitable mount, such as a bracket or a driven mounting. The mount is arranged so that; in use, the dressing tool is positioned within the enclosure. The mount may be within or outside the enclosure. When the mount is a driven mounting, it preferably has a drive supply, the drive supply preferably being outside the enclosure.

At least one of the spindle and the workpiece is arranged so that it can moved to bring the two parts closer together or move them further apart. This is necessary, as one skilled in the art would be aware, to allow the grinding wheel to grind the workpiece when the two are installed. Further, at least one of the spindle and the dressing tool mount is preferably arranged so that it can be moved to bring those two parts closer together or move them apart. This allows dressing of the grinding wheel. It is preferred that the spindle is arranged to be moveable in relation to the workpiece holder and in relation to the dressing tool mount. As a result, only one component, the spindle, is moveable in relation to the other two components, the dressing tool mount and the workpiece holder.

Preferably the enclosure defines a slot, through which the spindle passes, the slot extending in a direction between the workpiece holder and the dressing tool mount such that movement of the spindle along the length of the slot changes the distance between the spindle and the workpiece holder and between the spindle and the dressing tool mount. Preferably the holding also comprises a sealing mechanism to seal the slot, such that as the spindle moves along the slot, the remainder of the slot is sealed so coolant cannot escape through the slot. Any appropriate sealing mechanism could be used, such as, but not limited to, 1 or more moving plates or concertina guards. Preferably an eccentric plate is used.

As known by one skilled in the art, a spindle is generally cylindrical in shape and has a central axis. The spindle is also preferably arranged to move in a direction along its central axis, so that, in use the grinding wheel may be moved in this direction to allow shaping of either the wheel or the workpiece. This would be easily understood by one skilled in the art.

The spindle and its drive motor are preferably mounted on slides, especially cross slides, though any other appropriate mounting could be used. The slides are preferably positioned outside the enclosure so that they do not come into contact with coolant or grinding debris.

Movement of the spindle on the slides may be controlled by any known control system, particularly a computerised control system such as a proprietary machine control. Movement of the spindle may be driven by any suitable drive means such as a ball screw and servo motor.

The enclosure preferably has a door to allow easy access to the workpiece holder for insertion and removal of workpieces. The door is preferably arranged such that it does not open when the grinding wheel is positioned near to the workpiece.

A wheel guard is preferably provided to cover the grinding wheel when the door is open. The wheel guard is preferably moveable between a retracted and a closed position. When the wheel guard is in the retracted position it is preferably positioned so that the spindle may be moved along the slot to bring the grinding wheel into contact with the workpiece. In the closed position, the wheel guard preferably covers the grinding wheel so that the wheel is not accessible when the door is opened.

The machine may be provided with a loading system such as a robotic loading system for removal and insertion of workpieces. Any appropriate loading system could be used. Alternatively the workpieces may be inserted and removed by hand.

The coolant supply means may be any suitable means for delivering coolant to the enclosure, such as a pipe. The coolant may be supplied from a central supply tank that has its own pump and from which more than one machine obtains coolant. Alternatively, the coolant supply according to the invention may comprise a coolant tank and pump.

The coolant removal means may be any suitable means for removing the coolant and any grinding debris and fumes from the enclosure. The coolant removal means preferably comprises a pipe leading from the enclosure to a coolant removal tank and an extractor for aiding the removal of airborne coolant and grinding debris and fumes. The extractor may be any suitable extractor such as a fan or pump, providing it provides sufficient suction to draw airborne coolant and debris and fumes out of the enclosure and prevent such escaping from the enclosure when the door is opened.

As one skilled in the art would know, removed fumes should be filtered. The fumes may either be filtered in a central filter, separate from the machine, or the machine may include a filter.

The invention will now be further described, by way of example, with reference to the accompanying drawings, in which:
- Figure 1: is a front view of a grinding machine in accordance with the invention;
- Figure 2: shows the grinding wheel enclosure, with the grinding wheel removed and with a primary door in the open position;
- Figure 3: is a view corresponding to Figure 2 but showing the primary door closed and a secondary door open;
- Figure 4: is a cross-section through the enclosure of Figure 3, on the lines III-III.
- Figures 5, 6 and 7: show different views of the grinding wheel enclosure, all with the primary door removed for clarity and with a wheel guard in different positions;
- Figure 8: is a view from behind the grinding wheel enclosure;
- Figure 9: is a detailed view taken from the same direction of Figure 8, but with certain parts removed for clarity;
- Figure 10: shows the wheel guard from one side;
- Figure 11: shows the wheel guard from the other side; and
- Figure 12: is a side view of the wheel guard.

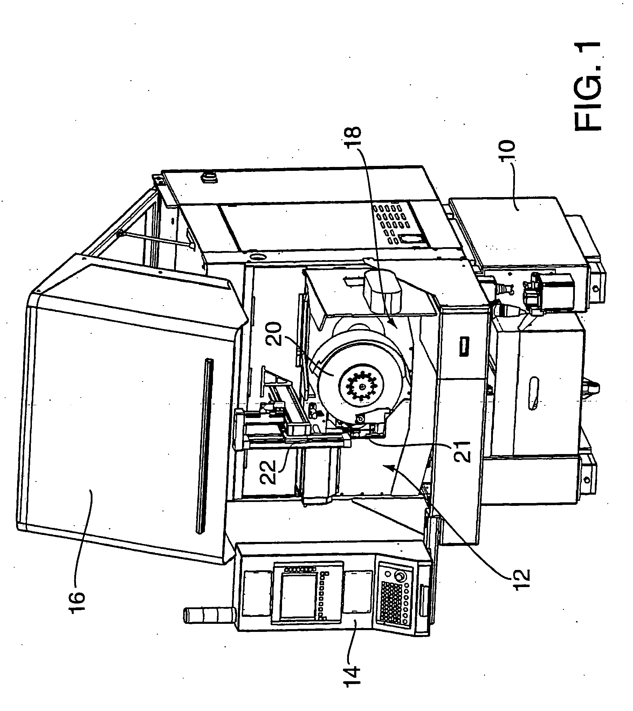

Figure 1 shows the general arrangement of a grinding machine in accordance with the invention. The machine has a base 10, a working area generally designated 12, a control panel 14 and an outer cover 16 which is shown in a raised position. When the machine is in operation, the cover 16 will be lowered. Within the working area 12 is a grinding enclosure 18 with a grinding wheel 20 and a workpiece holder 21. The remaining figures give more detail of the grinding enclosure.

Also visible in Figure 1 is a workpiece loading assembly 22. This loading assembly can take any suitable conventional form and does not form part of the present invention.

The workpiece holder 21 (which is not shown here in detail) can move in different directions in accordance with the grinding operation to be performed. In particular the holder may be able to move vertically to enable the machine to surface grind short workpieces, either flat or with a from such as a "fir tree root" for turbine blades.

The machine is primarily intended for grinding small components, typically components which require a maximum grinding length of 100mm, with a maximum length between centres of 160mm and a maximum diameter swing in chuck of 150mm. Such small components often have to be finished to very tight tolerance levels.

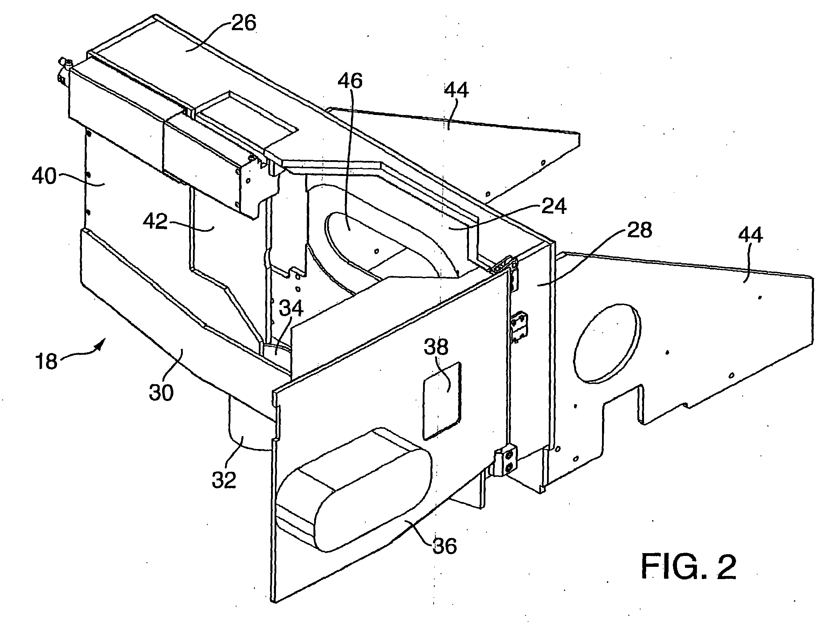

Figure 2 shows the grinding enclosure 18 separated from the body of the machine. The enclosure has a back wall 24, a top wall 26, side walls 28 (only one of which is visible in Figure 2) and a trough base 30 with a coolant exit pipe 32. The trough is angled so that coolant leaving the grinding area flows down and through an outlet 34 into the pipe 32. The area within the enclosure is a so-called "dirty area", while the area outside the enclosure, but still within the confines of the machine is a so-called "clean area". As the machine is for grinding small components, the dirty area can be kept relatively compact.

As the enclosure does not move it can form a structural part of the machine.

The front of the enclosure has a large door 36 with an inspection window 38. The left-hand half of the enclosure (as viewed in Figure 2) has a fixed front wall 40 and a smaller door in the from of a sliding panel 42 which can slide back behind the wall 40 and which is transparent to allow inspection of the grinding process whilst this is taking place. Clearly during grinding operation both door 36 and panel 42 will be closed. Panel 42 can be opened and closed to allow loading and unloading of workpieces, and the primary door 36 can be opened to give access to the enclosure and to mount or demount a grinding wheel.

Support brackets 44 support the enclosure within the grinding machine body.

It is a requirement in grinding machines in general that the grinding wheel be periodically dressed to regenerate the correct profile of its grinding surface. As will become apparent from the rest of this description, the grinding wheel 20, and its associated drive can move laterally from a working position in which the grinding wheel is in contact with the workpiece being ground, and a dressing position in which the wheel is moved away from the workpiece location and is in contact with a dressing wheel. To enable this movement to take place, the back wall 24 has an elongate aperture 46.

It is an object of the invention to provide a grinding enclosure which is no bigger than it needs to be to enclose the grinding wheel and the workpiece being ground, and for this grinding enclosure to be sealed during grinding operation, to keep the coolant which is directed onto the point of contact between the grinding wheel and the workpiece out of contact with the other parts of the machine such as the motors and feed mechanisms which control the movement of the grinding wheel, and the loading, unloading and positioning of the workpiece. To this end, the depth of the grinding enclosure is small, and the parts within the grinding enclosure are just the grinding wheel, the workpiece holder and the wheel dressing device.

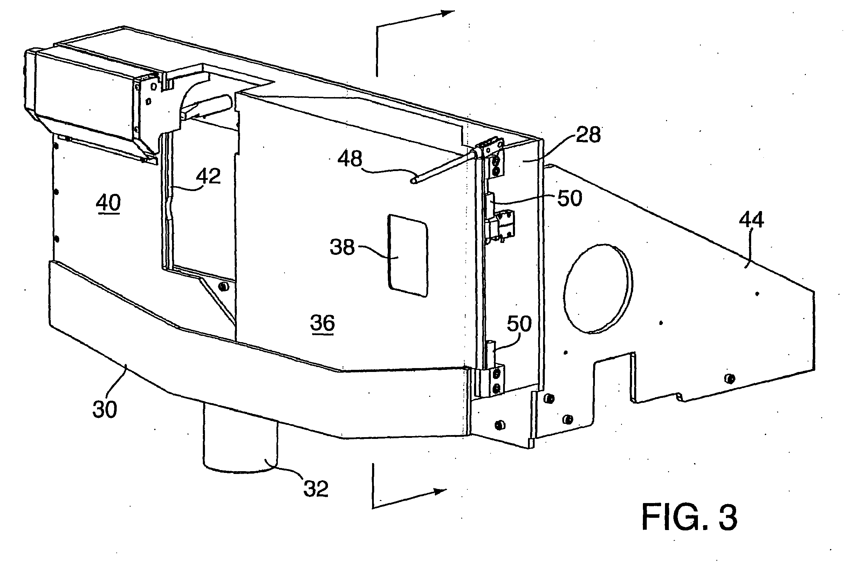

Figure 3 shows the primary door 36 closed (and the sliding panel 42 open). Although the grinding enclosure is to be sealed, the seal should not be a hermetic seal. The interface between the door 36 and the enclosure walls, and the sliding panel 42 are in the nature of labyrinth seals which prevent outflow of coolant from the enclosure. In practice and in operation, the extraction of the spent coolant will tend to produce a slightly lower than ambient pressure within the enclosure, with the consequence that there will be a small inflow of air through the labyrinth seals, which itself will assist in preventing egress of coolant from the enclosure.

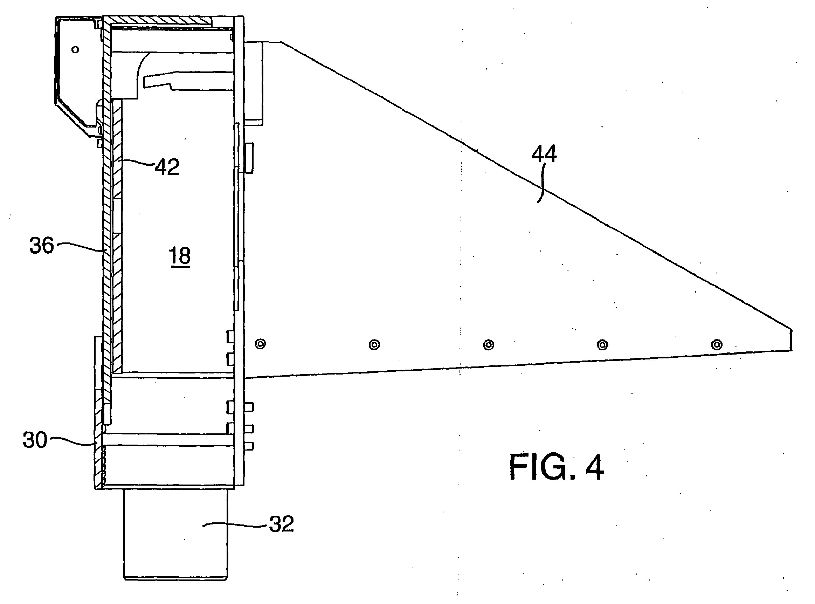

Figure 4 shows, in sectional view, the edges of the trough 30, the primary door 36 and the sliding panel 42 which will overlap one another. In order to move the primary door 36 between its open and closed positions, a cam arrangement, operated by a lever 48 first lifts the door 36 on its hinges 50, so that the bottom edge of the door 36 clears the upper edge of the trough 30.

The door can then be swung open manually to the position shown in Figure 2. When the door is closed again and the door lowered through operation of the lever 48, the door drops back below the edge of the trough, as can be seen in Figure 4.

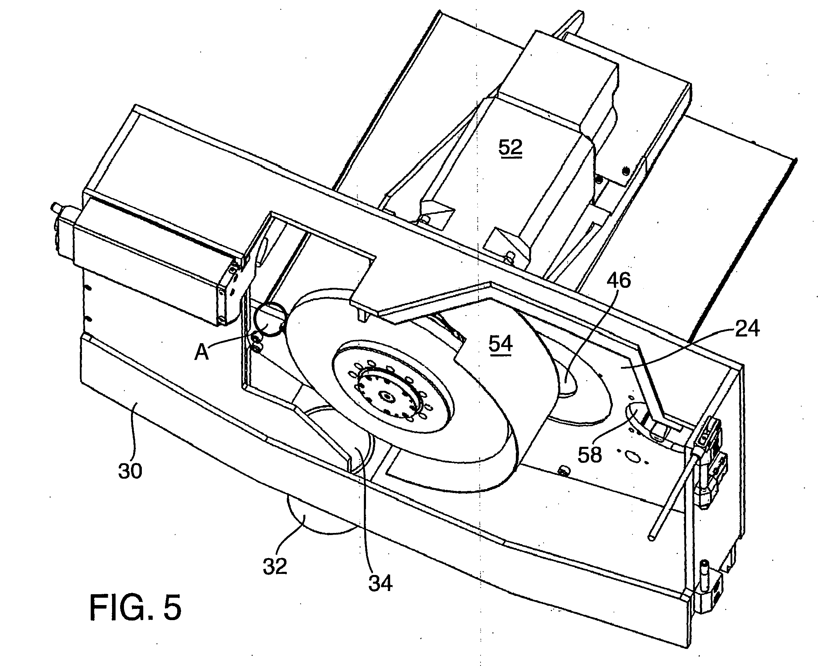

Figures 5 to 11 show how the grinding wheel is provided with a guard to ensure safety and operation and to direct coolant towards the exit opening 24. Figure 5 therefore shows a perspective from above of the enclosure 18, with the door 36 completely removed, to enable the other components to be seen without obstruction.

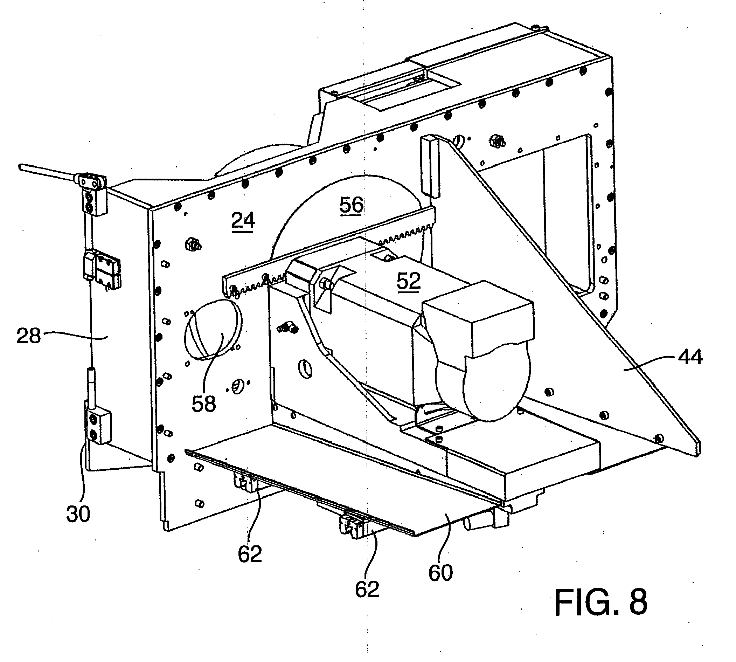

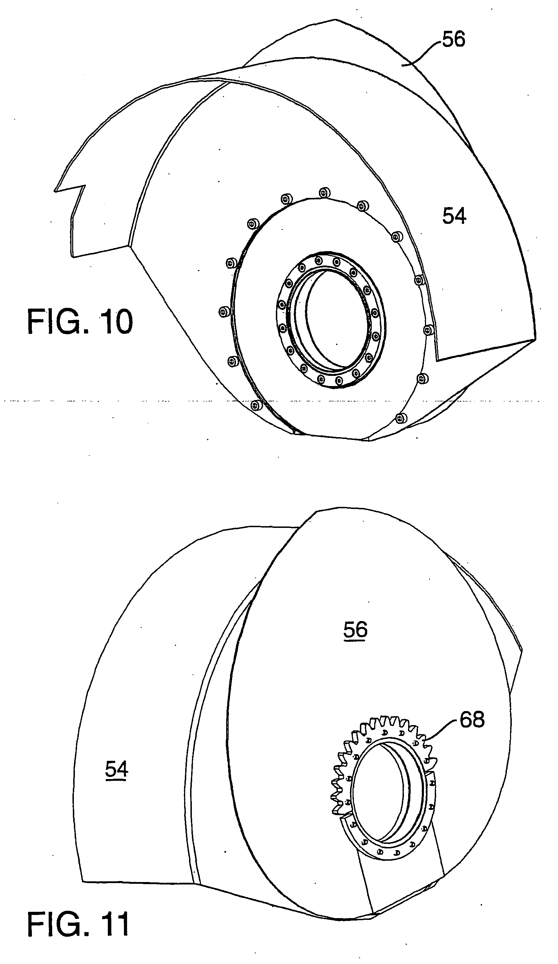

The grinding wheel 20 is mounted on a spindle driven by a motor 52. In some applications the wheel will actually be mounted on an arbor fixed to the spindle. The spindle passes through the oval hole 46 in the back plate 24. The motor and wheel assembly is mounted on slides (see Figure 8) so that it can move laterally from one end of the elongate aperture 46 to the other. As it does so, the wheel guard 54 will rotate around the axis of the spindle, and a cover plate 56 (see Figure 11) which is part of a single component with the guard 54, covers the otherwise exposed part of the aperture 46 to prevent coolant passing out of the enclosure through that aperture. The motor can also move forwards and backwards relative to the back plate 24 to move the edge of the grinding wheel in an axial direction relative to a workpiece held in the workpiece holder.

In Figure 5, the grinding wheel 20 is shown in its grinding position, and a workpiece holder (which is not shown in the figure) will position a workpiece in the area designated A.

A further aperture 58 in the back plate 24 will be provided for a dressing wheel, which is also not shown in the figures.

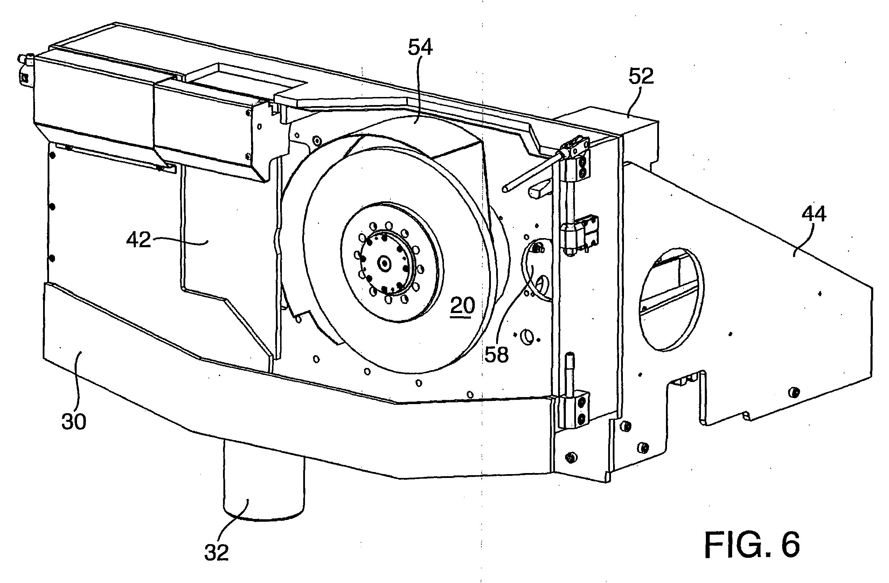

Figure 6 shows the grinding wheel 20 and motor 52 (and its subassembly) moved to the right-hand end of the aperture 46, in which position the wheel will be in contact with the wheel dressing tool mounted in the aperture 58. It will be seen that the guard 54 has now rotated around the axis of the wheel and spindle, and in this position if the sliding panel 42 is opened to allow loading or unloading of a workpiece (and the door 36 remains closed) there will be no access for an operator's hand to make contact with the grinding wheel 20.

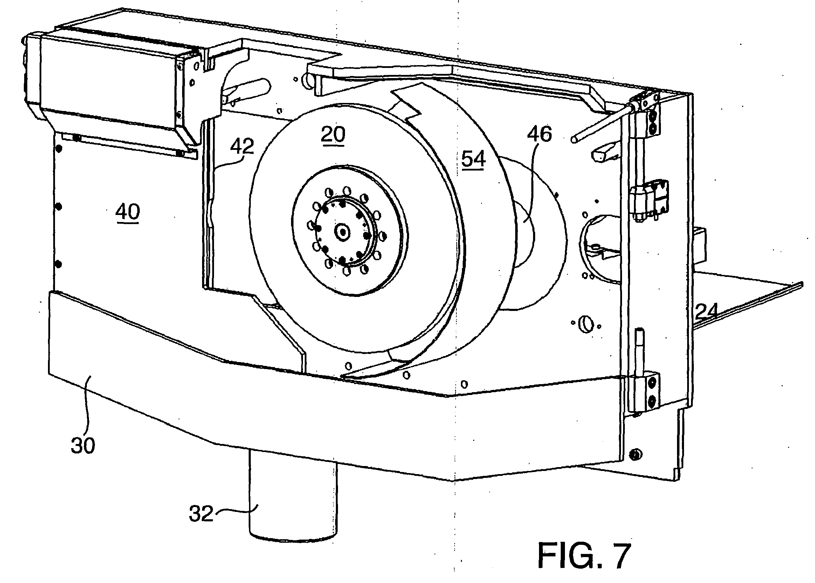

Figure 7 shows a view from the same angle as Figure 6, but with the grinding wheel at the left-hand end of the aperture 46, and the guard 54 in the same position as that which can be seen in Figure 5. In this position, grinding will take place and the sliding panel 42 will normally be closed.

Figure 8 shows a view from the back side of the back panel 24. From this view, the elongate aperture 46 cannot be seen at all, because it is always covered by the cover plate 56.

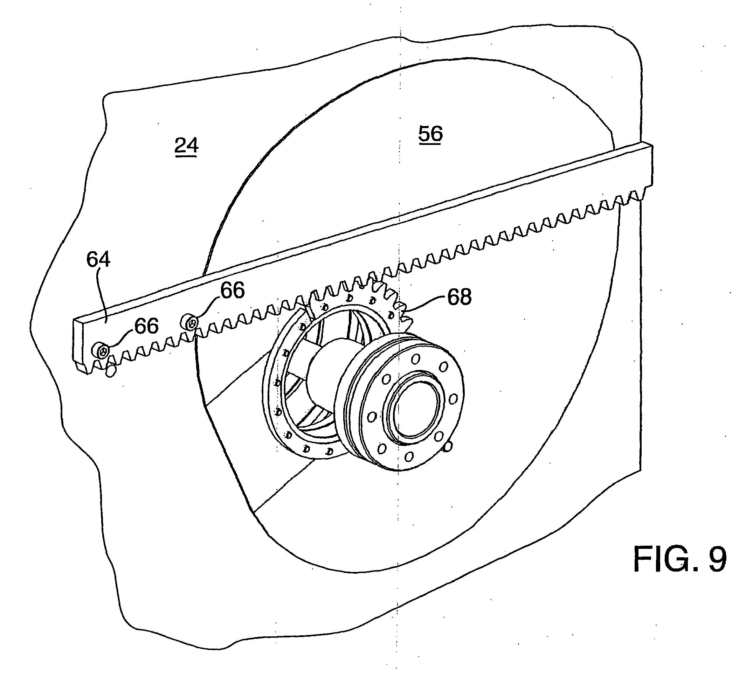

The drive motor 52 which drives the grinding wheel in rotation, is mounted on a tray 60 mounted on slides 62. This enables the motor to be translated between its grinding position and its wheel dressing position. In order to ensure that the aperture 46 is always closed, the cover plate 56 is mounted eccentrically on a collar which surrounds the grinding wheel drive spindle. This can be seen in Figure 9. A rack 64 is fixed to the back plate 24 by screws 66, and the eccentric cover plate 56 is provided with a pinion 68 which engages with the rack. In a position shown in Figure 9, the spindle is at its extreme right-hand end position (when viewed from the back plate 24), and the cover plate is rotated so that it covers the left-hand end of the aperture 46. When the motor 52 and the grinding wheel spindle move to the left, the engagement between the rack 64 and the pinion 68 will result in the cover plate 56 being rotated, so that the eccentric portion then covers the other end of the aperture 46.

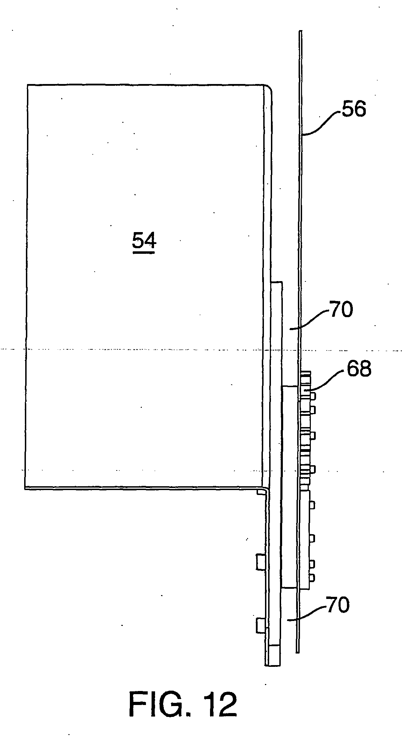

Figures 10, 11 and 12 show more details of the cover plate and grinding wheel guard. The spatial form of this guard can be appreciated from Figures 10 and 11. Figure 12 shows a side view and from this view it can be appreciated that, in the assembled machine, the guard 54 will lie on one side of the back wall 24, and the cover plate 56 will lie on the other side. The back plate 24 will therefore be received between these two parts, ie in the area indicated at 70.

In order to restrict the area within which cooling fluid and grinding debris are present, it is desirable to make the enclosure as small as possible. However it is necessary (a) for the grinding wheel to move between its grinding position and its dressing position, and it is also necessary for the enclosure to be opened to allow for workpiece loading and unloading and grinding wheel removal and replacement. The necessary aperture in the back of the enclosure is always closed by the cover plate 56, and the front of the enclosure is closed by the door 36 and the sliding panel 42. The labyrinth seals between the opening door and panel, together with the slightly sub-ambient pressure within the grinding enclosure, ensure that there is virtually no escape of cooling fluid and debris from the enclosure, and all the fluid and debris passes into the trough 30 and through the outlet pipe 32, to a conventional filtration and cleaning system which allows the coolant to be recycled through the machine.

The enclosure within the machine thus substantially avoids any exposure of the motor and other machine parts to the coolant and grinding debris which can substantially prolong their working life. The coolant can be efficiently collected, cleaned and recycled as it is contained within a relatively small volume. Cleaning of the machine as a whole is also made considerably easier.

## Claims

1. A grinding machine having a grinding enclosure with a grinding wheel, a workpiece holder, means for removing grinding debris from the enclosure and mechanisms for driving the wheel, for moving the workpiece holder and for loading and unloading workpieces being provided outside of the enclosure.

2. A grinding machine comprising a spindle for supporting a grinding wheel and having a drive supply, a work head having a drive supply, the work head being provided with a workpiece holder for supporting a workpiece; at least one of the spindle and the workpiece holder being arranged such that it can move closer to the other; the machine further comprising a substantially sealed enclosure that encloses the spindle and the workpiece holder, the enclosure being provided with a coolant supply means and a coolant removal means; wherein the coolant removal means is arranged such that, in use, coolant is removed from the enclosure without coming into contact with parts of the grinding machine that are outside the enclosure, other than the coolant removal means.

3. A machine as claimed in Claim 2, wherein the drive supply for the spindle is external to the enclosure.

4. A machine as claimed in any preceding claim, wherein the drive supply for the workpiece holder is external to the enclosure.

5. A machine as claimed in any preceding claim, wherein the grinding machine further comprises a dressing tool mount for supporting a dressing tool for dressing the grinding wheel, in use.

6. A machine as claimed in any preceding claim, wherein at least one of the spindle and the workpiece holder is arranged so that it can be moved to bring the two parts closer together or move them further apart.

7. A machine as claimed in any preceding claim, wherein at least one of the spindle and the dressing tool mount is arranged so that it can be moved to bring those two parts closer together or move them apart.

8. A machine as claimed in Claim 6 or Claim 7, wherein the spindle is arranged to be moveable in relation to the workpiece holder and in relation to the dressing tool mount.

9. A machine as claimed in any one of Claims 5 to 8, wherein a wall of the enclosure has a slot through which the spindle passes, the slot extending in a direction between the workpiece holder and the dressing tool mount such that movement of the spindle along the length of the slot changes the distance between the spindle and the workpiece holder and between the spindle and the dressing tool mount.

10. A machine as claimed in Claim 9, including a sealing mechanism to seal the slot, such that as the spindle moves along the slot, the remainder of the slot is sealed so coolant cannot escape through the slot.

11. A machine as claimed in Claim 10, wherein an eccentric plate is mounted on the axis of the spindle and behind the slot in the wall and carries a pinion around its eccentric centre of rotation, and wherein a rack is mounted on the wall to engage with the pinion so that as the spindle moves along the slot, the plate is rotated by the engagement between the pinion and the rack to cover the part of the slot not occupied by the spindle.

12. A machine as claimed in any preceding claim, wherein the drive supply mechanism for driving the grinding wheel is mounted on slides outside the enclosure.

13. A machine as claimed in any preceding claim, wherein the enclosure has a first door to allow access to the workpiece holder for insertion and removal of workpieces and a second door to allow access to the grinding wheel.

14. A machine as claimed in Claim 13, wherein the first door is a sliding door which does not open when the grinding wheel is positioned near to the workpiece.

15. A machine as claimed in Claim 13 or Claim 14, wherein the second door is a hinged door and, in the closed position, the edge of the door overlaps an edge of the enclosure to form a labyrinth seal to the enclosure.

16. A machine as claimed in Claim 15, wherein the door is mounted on hinges provided with a lifting mechanism, so that the door can be lifted on its hinge axes to clear the adjacent edges of the enclosure, before being swung open.

17. A machine as claimed in any preceding claim, wherein a wheel guard is provided to cover the grinding wheel when the first door is open.

18. A machine as claimed in Claim 17, wherein the wheel guard extends around a portion of the periphery of the grinding wheel and is rotatable between a first position where it surrounds an edge of the grinding wheel adjacent to the first door and lies between the wheel and the workpiece holder, and a second position, and wherein the guard takes up the first position when the wheel is moved away from the workpiece holder.
